## Europäisches Patentamt

## European Patent Office

## Office européen des brevets

(19)

(11) Numéro de publication: **0 165 107 B1**

(12) **FASCICULE DE BREVET EUROPEEN**

(45) Date de publication du fascicule du brevet:
**17.11.88**

(21) Numéro de dépôt: **85400867.9**

(22) Date de dépôt: **03.05.85**

(51) Int. Cl.⁴: **H 02 M 7/797,** H 02 M 7/219, H 02 M 1/084

(54) Amplificateur à découpage et application de cet amplificateur à l'alimentation d'un moteur autosynchrone.

(30) Priorité: **09.05.84 FR 8407140**

(43) Date de publication de la demande:
**18.12.85 Bulletin 85/51**

(45) Mention de la délivrance du brevet:
**17.11.88 Bulletin 88/46**

(84) Etats contractants désignés:
**CH DE FR GB IT LI**

(56) Documents cités:
**EP - A - 0 057 340**
**EP - A - 0 124 302**
**DE - A - 2 213 612**
**FR - A - 2 451 129**
**GB - A - 2 117 985**
**US - A - 3 679 959**

(73) Titulaire: **COMMISSARIAT A L'ENERGIE ATOMIQUE,**
**31/33, rue de la Fédération, F-75015 Paris (FR)**

(72) Inventeur: **Basire, Alain, 4, rue de Fontenay,**
**F-78000 Versailles (FR)**

(74) Mandataire: **Mongrédien, André et al, c/o**
**BREVATOME 25, rue de Ponthieu, F-75008 Paris (FR)**

ACTORUM AG

## Description

La présente invention concerne un amplificateur à découpage. Elle s'applique à la régulation de la tension d'alimentation d'une charge et, notamment à la régulation de la tension d'alimentation d'un moteur, notamment d'un moteur autosynchrone. Ce moteur peut être par exemple du genre de ceux qui sont utilisés en robotique; dans ce domaine particulier, les moteurs absorbent, par moments, de l'énergie électrique, pour fournir de l'énergie mécanique et absorbent, par moments, de l'énergie mécanique pour restituer de l'énergie électrique à la source qui les alimente.

On connaît des amplificateurs à découpage qui permettent, notamment, d'alimenter des moteurs à courant continu. Ces amplificateurs à découpage sont de deux types: le découpage peut être effectué soit à partir de deux tensions continues, l'une positive, l'autre négative, soit à partir du réseau électrique alternatif.

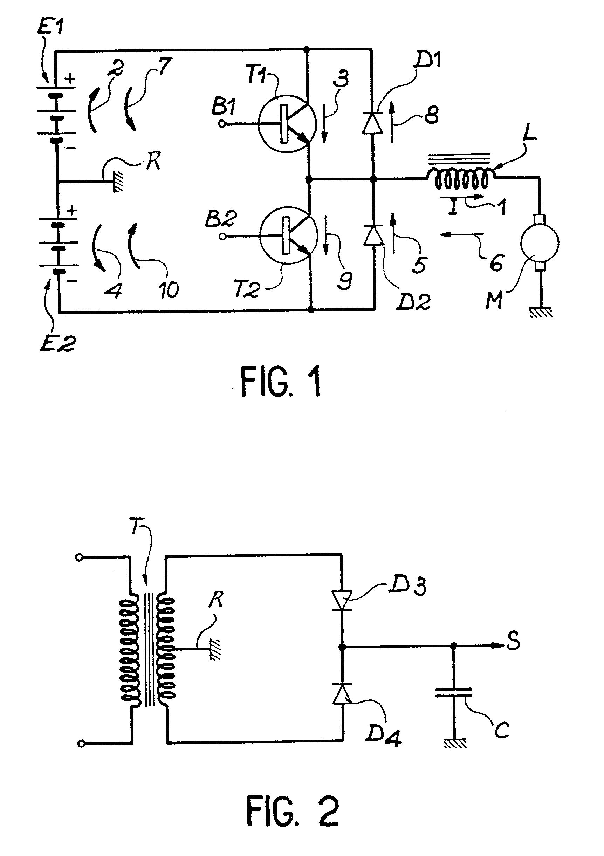

Un amplificateur à découpage fonctionnant à partir de deux tensions continues, l'une positive, l'autre négative, est représenté sur la figure 1. Cet amplificateur à découpage comprend deux sources de tension continues E1, E2 reliées en série; le point commun à ces deux sources est relié à une masse de référence R. La source E1 qui fournit une tension positive par rapport à la masse, est reliée à la charge (un moteur M par exemple) par l'intermédiaire d'une diode D1 branchée en inverse, et d'une self L. La source négative $E_2$ est reliée au moteur M, par l'intermédiaire d'une diode D2, branchée en inverse, et par l'intermédiaire de la self L. Des transistors T1, T2, de type bipolaire par exemple, sont reliés respectivement entre la borne positive de la source E1 et une borne de la self L et entre la borne négative de la source E2 et la borne de la self L. Ces transistors qui fonctionnent en commutation reçoivent sur leur base B1, B2 des signaux de commutation. Ces transistors sont équivalents à des interrrupteurs et sont commandés, par des moyens non représentés, en fonction du découpage des tensions continues permettant d'obtenir la régulation souhaitée.

Lorsque le moteur M absorbe de l'énergie électrique et restitue de l'énergie mécanique, un courant I parcourt la self L dans le sens indiqué par la flèche 1. Dans ce cas, et dans une première phase, le transistor T1 est rendu conducteur tandis que le transistor T2 est bloqué. Les courants dans les différentes branches du circuit sont représentés par les flèches 2 et 3 et la source E1 fournit de l'énergie. Dans ce cas, et dans une deuxième phase, le transistor $T_1$ est bloqué et le transistor $T_2$ est conducteur mais il n'y circule aucun courant: le courant est représenté par les flèches 4 et 5 et la source $E_2$ absorbe de l'énergie.

Au contraire, lorsque le moteur absorbe de l'énergie mécanique et restitue de l'énergie électrique, le courant dans la self L circule dans le sens indiqué par la flèche 6. Dans ce cas, et dans une première phase, le transistor $T_2$ est rendu conducteur et le transistor $T_1$ est bloqué. Les courants dans les différentes branches du circuit sont représentés par les flèches 9 et 10, et la source E2 de tension négative, fournit de l'énergie. Dans ce cas, et dans une deuxième phase, le transistor $T_2$ est bloqué et le transistor $T_1$ est rendu conducteur mais il n'y circule aucun courant: le courant est représenté par les flèches 7 et 8 et la source E1 de tension positive absorbe de l'énergie.

On voit que dans les deux cas, l'une des sources fournit de l'énergie alors que l'autre en reçoit.

Le principal inconvénient de l'amplificateur à découpage selon la figure 1 est que l'on dispose rarement de batteries d'accumulateurs, qui sont chères, lourdes, encombrantes, sales et de fiabilité médiocre, et jamais de deux réseaux continus l'un positif, l'autre négatif.

Une alimentation à découpage fonctionnant à partir du réseau alternatif est obtenue en remplaçant les sources $E_1$ et $E_2$ par deux montages tels que celui de la figure 2. Ce montage comprend, par exemple, un transformateur d'entrée T dont le secondaire présente un point milieu relié à une masse de référence R. Les extrémités de ce secondaire sont reliées à deux diodes D3, D4 qui permettent d'obtenir sur la sortie S, une tension redressée. Un condensateur C de filtrage relie cette sortie à la masse de référence. Si la sortie S de l'alimentation à découpage obtenue est reliée, comme dans l'exemple précédent à un moteur M, aucun problème ne se pose lorsque ce moteur reçoit de l'énergie électrique et fournit de l'énergie mécanique. Au contraire, lorsque le moteur reçoit de l'énergie mécanique et restitue de l'énergie électrique au réseau, la tension aux bornes du condensateur C s'accroît rapidement. Lorsque cette tension devient trop importante, il se produit un claquage destructif du condensateur, et éventuellement des transistors $T_1$ et $T_2$ et de diodes $D_3$ et $D_4$. Il y a donc lieu de prévoir un système déchargeant les condensateurs à travers une résistance par exemple, lorsque la tension à ses bornes dépasse une certaine valeur. Ce système, généralement assez compliqué, nécessite évidemment l'évacuation de l'énergie calorifique au moyen de radiateurs ou de ventilateurs. Ceci est un grave inconvénient puisque généralement, on recherche un faible encombrement des amplificateurs à découpage et que tout système d'évacuation de calories est généralement encombrant.

Un autre type d'amplificateur à découpage fonctionnant à partir du secteur alternatif et, grâce auquel il est possible de restituer de l'énergie au secteur est décrit dans le brevet FR-A 2 451 129. Cet amplificateur comporte des moyens de commutation reliés entre les phases du réseau et la charge. Ces moyens de commutation sont bidirectionnels et sont commandés par des moyens de contrôle agissant sur les interrupteurs pour qu'un seul d'entre eux soit fermé, lorsque les autres sont ouverts. Cet amplificateur a toutefois pour inconvénient de présenter une structure compliquée, car chaque phase de la tension d'entrée est connectée à son tous à chaque phase de la tension de sortie selon une séquence réitérative d'impulsions modulées en durée.

L'invention a pour but de remédier à ces inconvénients et notamment, de réaliser un amplificateur à découpage ayant une structure simple.

L'invention a pour objet un amplificateur à découpage, pour réguler la tension d'alimentation d'une charge, comprenant une pluralité d'interrupteurs bidirectionnels constituant des moyens de commutation reliés, d'une part, à l'une des n phases d'un réseau alternatif polyphasé et, d'autre part, à une première borne d'une self, la charge étant connectée entre une deuxième borne de la self et une masse de référence du reseau, un comparateur de consigne dont une entrée reçoit une tension proportionnelle au courant circulant dans la charge et dont une autre entrée reçoit une tension de consigne en courant, une sortie de ce comparateur étant reliée à une entrée de commande des moyens de commutation pour réguler la tension appliquée à la charge, des moyens de contrôle reliés par des entrées aux phases du réseau et ayant n sorties reliées respectivement à n entrées de commande des n interrupteurs bidirectionnels, les moyens de contrôle commandant ces interrupteurs pour qu'un seul d'entre eux soit fermé lorsque les autres sont ouverts, de sorte que soit sélectionnée la phase dont le potentiel est le plus positif par rapport au potentiel de la masse de référence lorsque la tension proportionnelle au courant appliqueé à la charge est inférieure à la tension de consigne en courant et pour sélectionner la phase dont le potentiel est le plus négatif par rapprot au potentiel de la masse de référence, lorsque la tension proportionnelle au courant appliquée à la charge est supérieure à la tension de consigne en courant.

Selon une autre caractéristique, les moyens de contrôle comprennent n $\frac{(n-1)}{2}$ comparateurs de tension de phases, comportant chacun deux entrées et une sortie, les n $\frac{(n-1)}{2}$ sorties de ces comparateurs fournissant respectivement des signaux binaires représentatifs des résultats de ces comparaisons, une mémoire morte présentant des entrées d'adressage qui sont reliées respectivement aux n $\frac{(n-1)}{2}$ sorties des comparateurs de tensions de phases et à la sortie du comparateur de consigne, les entrées de commande des moyens de commutation étant respectivement reliées à n sorties de données de la mémoire, chaque adresse de la mémoire contenant n données binaires qui sont fournies à chaque instant, respectivement sur les n sorties de la mémoire, l'une de ces données correspondant à chaque instant à la fermeture de l'un des interrupteurs, et les n-1 autres données correspondant à l'ouverture des n-1 autres interrupteurs, l'adresse sélectionnée à chaque instant dans la mémoire, par les signaux de sortie des comparateurs étant l'adresse pour laquelle la phase à cet instant est celle dont le potentiel est le plus positif par rapport au potentiel de la masse de référence, la tension proportionnelle au courant circulant dans la charge étant inférieure à la tension de consigne en courant, ou l'adresse pour laquelle la phase à cet instant est celle dont le potentiel est le plus négatif par rapport au potentiel de la masse de référence, la tension proportionnelle au courant circulant dans la charge étant supérieure à la tension de consigne.

Selon une autre caractéristique, chaque interrupteur comprend un pont à quatre diodes situées respectivement dans quatre branches reliant quatre nœuds de ce pont qui est en outre défini par deux diagonales, deux des nœuds du pont situés sur l'une des diagonales étant reliés respectivement à la phase correspondante du réseau, et à la masse de référence, l'interrupteur comprenant en outre un transistor de commutation, dont une électrode de commande de commutation reçoit le signal de la sortie correspondante de la mémoire pour cette phase, les deux autres électrodes du transistor étant respectivement reliées aux deux autres nœuds du pont situés sur l'autre diagonale, les diodes étant orientées de manière que le courant circulant dans le transistor, lorsqu'il est rendu conducteur par le signal de sortie de la mémoire, soit toujours de même sens, quelle que soit l'alternance de la phase appliquée au pont, l'état conducteur du transistor correspondant à la fermeture dudit interrupteur, l'état bloqué du transistor correspondant à l'état ouvert de l'interrupteur.

Selon une autre caractéristique, l'amplificateur à découpage comprend en outre des moyens reliés à la charge pour comparer la valeur de la tension proportionnelle au courant dans la charge avec la valeur d'une tension maximum proportionnelle à un courant maximum pouvant circuler dans la charge, une sortie de ces moyens de comparaison étant reliée à une autre entrée d'adressage de la mémoire pour que, lorsque la tension proportionnelle au courant dans la charge dépasse la tension maximum, la mémoire soit adressée de manière que ses sorties fournissent des données binaires correspondant au blocage de tous les transistors de commande des interrupteurs.

Selon une autre caractéristique, l'amplificateur comprend en outre des moyens bidirectionnels de dissipation d'énergie, connectés entre la première borne de la self et la masse de référence, pour dissiper l'énergie impulsionnelle résultant de la surtension sur cette première borne, entre l'ouverture d'une interrupteur et la fermeture d'une autre.

Selon une autre caractéristique, les donnés binaires de sorties de la mémoire sont appliquées respectivement aux électrodes de commande des transistors par des moyens de couplage et d'adaptation d'impédance.

Une application d'une amplificateur à découpage conforme à l'invention prévoit l'alimentation des enroulements d'un moteur autosynchrone.

Les caractéristiques et avantages de l'invention ressortiront mieux de la description qui va suivre donnée en référence aux dessins annexés dans lesquels:

- la figure 1 a déjà été décrite et représente schématiquement un amplificateur à découpage, de type connu, fonctionnant à partir de deux sources d'alimentation continues,
- la figure 2 a déjà été décrite et représente schématiquement un montage à remplacer respectivement les sources $E_1$ et $E_2$ dans la figure 1 pour créer un amplificateur à découpage, de type connu, fonctionnant à partir du réseau alternatif d'alimentation électrique,
- la figure 3 représente schématiquement un amplificateur à découpage conforme à l'invention,
- la figure 4 représente en (a) un chronogramme représentant différentes phases du réseau alternatif alimentant l'amplificateur de l'invention; cette figure représente en (b) un tableau qui permet de mieux comprendre la commande des moyens de commutation intervenant dans l'amplificateur de l'invention,
- la figure 5 est un tableau permettant de mieux comprendre le fonctionnement de moyens de contrôle commandant les moyens de commutation qui interviennent dans l'amplificateur de l'invention,
- la figure 6 représente schématiquement l'application d'un amplificateur conforme à l'invention à l'alimentation d'un moteur autosynchrone,
- la figure 7 est un diagramme qui permet de mieux comprendre les commutations de phase, dans l'alimentation du moteur autosynchrone,
- la figure 8 représente en (a) la variation du courant dans l'un des enroulements du moteur, et en (b) la variation de la tension appliquée à cet enroulement.

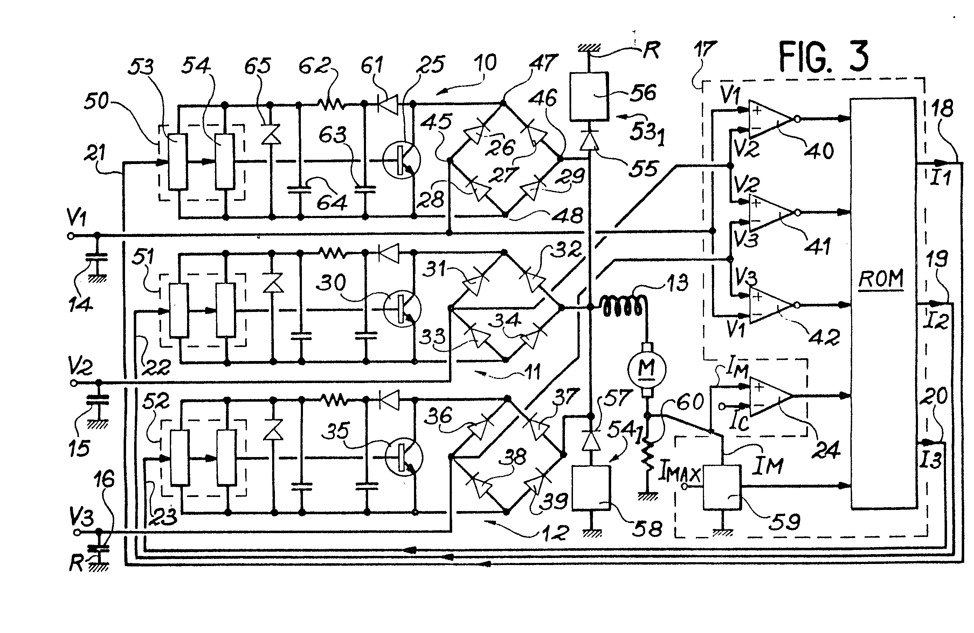

La figure 3 représente schématiquement un amplificateur à découpage, conforme à l'invention. Cet amplificateur permet de réguler la tension d'alimentation d'une charge constituée par exemple, par un moteur M. Il comprend dans l'exemple de réalisation représenté sur la figure, des moyens de commutation 10, 11, 12 qui sont reliés d'une part, respectivement aux 3 phases d'un réseau électrique alternatif triphasé et, d'autre part, à une première borne d'une self 13. Le moteur M constituant la charge est connecté entre une deuxième borne de cette self et une masse de référence R du réseau. On suppose dans l'exemple de réalisation représenté sur cette figure que le réseau est triphasé, mais qu'il pourrait comprendre un nombre n entier de phases et n moyens de commutation. Les tensions du réseau triphasé, dans l'exemple considéré, sont désignées respectivement par V1, V2, V3. Chacune des phases de ce réseau est découplée par un condensateur. Les condensateurs de découplage de différentes phases sont représentés en 14, 15, 16. Ils servent à compenser le caractère selfique du réseau, pour que des variations brutales de courant n'entrainent pas des variations brutales de tension.

L'amplificateur comprend aussi des moyens de contrôle 17, reliés par des entrées, aux phases du secteur. Pour un réseau à n phases, ces moyens de contrôle présentent n sorties reliées à n entrées de commande des moyens de commutation. Dans l'exemple de réalisation considéré (réseau triphasé), les moyens de contrôle présentent trois sorties 18, 19, 20 reliées respectivement à des entrées de commande 21, 22, 23 des moyens de commutation 10, 11, 12. Enfin, l'amplificateur comprend aussi un comparateur de consigne 24, dont une entrée reçoit une tension ($I_M$) proportionnelle au courant circulant dans la charge M, et dont une autre entrée reçoit une tension ($I_C$) de consigne en courant. Une sortie de comparateur est reliée à une entrée de commande des moyens de contrôle 17. Ces moyens de contrôle commandent les moyens de commutation pour réguler la tension appliquée à la charge, comme on le verra plus loin en détail.

Chacun des moyens de commutation reliés à chacune des phases $V_1$, $V_2$, $V_3$, est constitué, comme on le verra plus loin en détail, par un interrupteur bidirectionnel. Pour les moyens de commutation 10 reliés à la phase $V_1$, l'interrupteur bi-directionnel comprend un transistor 25 de type bipolaire, par exemple, ainsi qu'un pont de diodes comprenant les diodes 26, 27, 28, 29. De la même manière, l'interrupteur bidirectionnel des moyens de commutation 11, comprend un transistor 30, par exemple bipolaire, ainsi que des diodes 31, 32, 33, 34. Enfin, l'interrupteur bidirectionnel des moyens de commutation 12, comprend un transistor 35, par exemple bipolaire ainsi qu'un pont de diodes 36, 37, 38, 39. Le transistor bipolaire qui agit en commutation, comme on le verra plus loin en détails pourrait être remplacé par exemple, par un transistor à effet de champ, ou par un thyristor G.T.O.

Les moyens de contrôle 17, associés au comparateur 24, commandent les interrupteurs mentionnés plus haut, de manière qu'un seul d'entre eux soit ferme lorsque tous les autres sont ouverts. Comme on le verra plus loin en détail, ceci permet de sélectionner la phase dont le potentiel est le plus positif par rapport au potentiel de la masse de référence, lorsque la tension $I_M$ proportionnelle au courant circulant dans la charge est inférieure à la tension de consigne $I_C$. Les moyens de contrôle 17 commandent aussi ces interrupteurs pour qu'un seul d'entre eux soit fermé lorsque les autres sont ouverts, de sorte que soit sélectionnée la phase dont le potentiel est le plus négatif par rapport au potentiel de la masse de référence, lorsque la tenison $I_M$ proportionnelle au courant circulant dans la charge est supérieure à la tension de consigne $I_C$.

Dans l'exemple de réalisation représenté sur la figure (le réseau d'alimentation électrique étant triphasé), les moyens de contrôle 17 comprennent trois comparateurs 40, 41, 42, de tensions de phases. Ces comparateurs permettent de comparer deux à deux les trois phases du secteur. Les sorties de ces comparateurs sont respectivement reliées aux entrées d'une mémoire ROM à lecture seule. Le comparateur 40 permet de comparer les tensions $V_1$, $V_2$ de deux phases, le comparateur 41 permet de comparer les tensions $V_2$, $V_3$ de deux autres phases et le comparateur 42 permet de comparer les tensions $V_3$ et $V_1$ de deux autres phases. D'une manière générale, pour un réseau électrique alternatif d'alimentation comportant n phases, les moyens de contrôle 17 comprennent $n\frac{(n-1)}{2}$ comparateurs de tension de phases, qui comportent chacun deux entrées et une sortie; les $n\frac{(n-1)}{2}$ sorties de ces comparateurs fournissent respectivement des signaux binaires représentatifs des résultats de ces comparaisons: dans l'exemple de réalisation considéré (réseau triphasé), le comparateur 40 fournit un signal de niveau logique 0, si la tension $V_1$ sur son entrée positive est supérieure à la tensions $V_2$ sur son entrée négative. Dans le cas contraire, ce comparateur fournit un signal de niveau logique 1. (On suppose que ces comparateurs sont des comparateurs inverseurs). De la même manière, le comparateur 42 fournit un signal de niveau logique 0 si la tension $V_2$ est supérieure à la tension $V_3$ et fournit un signal de niveau logique 1 dans le cas contraire. Enfin, le comparateur 42 fournit un signal de niveau logique 0 si la tension $V_3$ est supérieure à la tension $V_1$, et fournit un signal de niveau logique 1 dans le cas contraire. Le comparateur 24 agit de la même manière pour $I_M > I_C$ ou pour $I_M < I_C$. On verra plus loin en détail comment ces signaux de niveau logique 0 ou 1, fournis par les comparateurs 40, 41, 42, ainsi que par le comparateur 24, sont utilisés pour adresser la mémoire ROM des moyens de contrôle 17.

Les diodes telles que 26, 27, 28, 29 des moyens de commutation 10 par exemple, sont situées dans les quatre branches d'un pont reliant quatre nœuds 45, 46, 47, 48 de ce pont qui est également défini par deux diagonales; ces deux diagonales sont par exemple, pour les moyens de commutation 10, les diagonales 47, 48 et 45, 46. Deux des nœuds 45, 46 de la diagonale correspondante, sont respectivement reliés à la phase $V_1$ du réseau et à la masse de référence R. Le transistor 25 reçoit sur son électrode de commande (base), par l'intermediaire de moyens de couplage et d'adaptation 50, le signal de commande de commutation provenant de la sortie correspondante 18 de la mémoire ROM. Les deux autres électrodes de ce transistor (collecteur et émetteur) sont respectivement reliées aux deux autres nœuds 47, 48 du pont de diodes, situés sur l'autre diagonale. Les diodes sont orientées de manière que le courant circulant dans le transistor lorsque ce transistor est rendu conducteur par le signal de sortie de la mémoire, soit toujours de même sens, quelle que soit l'alternance de la phase $V_1$ appliquée aux ponts. L'état conducteur du transistor correspond bien entendu à la fermeture de l'interrupteur qui vient d'être décrit, tandis que l'état bloqué de ce transistor correspond à l'état ouvert de cet interrupteur. De la même manière, la base du transistor 30 reçoit le signal de commande provenant de la sortie 19 de la mémoire ROM, par l'intermédiaire de moyens de couplage et d'adaptation 51, tandis que le transistor 35 reçoit le signal de commande provenant de la sortie 20 de la mémoire, par l'intermédiaire de moyens de couplage et d'adaptation 52. Les moyens de couplage et d'adaptation ne sont pas décrits ici en détail. Les moyens de couplage peuvent être par exemple constitués de façon connue par un circuit optoélectronique 53 qui permet de découpler le transistor 25 et les sorties de la mémoire ROM, pour éviter toute surtension sur les sorties de cette mémoire lorsque le transistor commute entre les phases dont les tensions présentent des valeurs élevées. Les moyens d'adaptation 54 sont essentiellement constitués par des circuits adaptateurs d'impédance. les moyens de couplage et d'adaptation 51, 52 sont constitués de façon semblable aux moyens 50.

L'amplificateur comprend aussi des moyens bidirectionnels $53_1$, $54_1$ de dissipation d'énergie, connectés entre la première borne de la self et la masse de référence R; ces moyens permettent de dissiper l'énergie impulsionnelle résultant de la surtension sur la première borne de la self, entre l'ouverture d'un interrupteur et la fermeture d'un autre; ils sont constitués, pour les impulsions, positives par rapport à la masse de référence, par une diode 55 associée à un circuit de dissipation d'énergie 56; ce circuit de dissipation, qui n'est pas représenté en détails, peut être constitué de manière connue par des transistors, des résistances et des condensateurs, ou plus simplement par une diode de Zener. De la même manière, les moyens $54_1$ de dissipation d'énergie pour les impulsions négatives par rapport à la masse de référence R, peuvent être constitués par une diode 57 reliée à un circuit 58 de dissipation d'énergie ou à une diode de Zener.

L'amplificateur comprend aussi des moyens 59 pour comparer la tension $I_M$ proportionnelle au courant circulant dans la charge M, avec une tension $I_{max}$ de consigne de courant. Ces moyens comportent une entrée qui est reliée à un point commun entre la charge M et une résistance 60, elle-même reliée à la masse de référence; une autre entrée des moyens de comparaison de tension 59, reçoit une tension de consigne $I_{max}$ proportionnelle au courant maximum que peut accepter la charge. Cette tension de consigne a une valeur prédéterminée, au-delà de laquelle le courant trop élevé peut détruire l'amplificateur. La sortie du comparateur de tension 59 est reliée à une autre entrée d'adressage de la mémoire ROM. La sortie du comparateur 59 fournit un signal de niveau logique 0 si la tension $I_M$ proportionnelle au courant dans la charge est inférieure à la tension de consigne $I_{max}$.

Les moyens de commutation tels que 10 sont alimentés directement par le pont de diodes, en courant continu, grâce à la diode 61 reliée à la résistance 62 elle-même reliée aux condensateurs 63, 64 et à la diode de Zener 65. La résistance 62 et la diode de Zener 65, permettent de ramener à 12 volts par exemple la tension d'alimentation appliquée au transistor 25 et aux moyens de couplage et d'adaptation 50. Le même type d'alimentation est utilisé pour les moyens de commutation 11, 12.

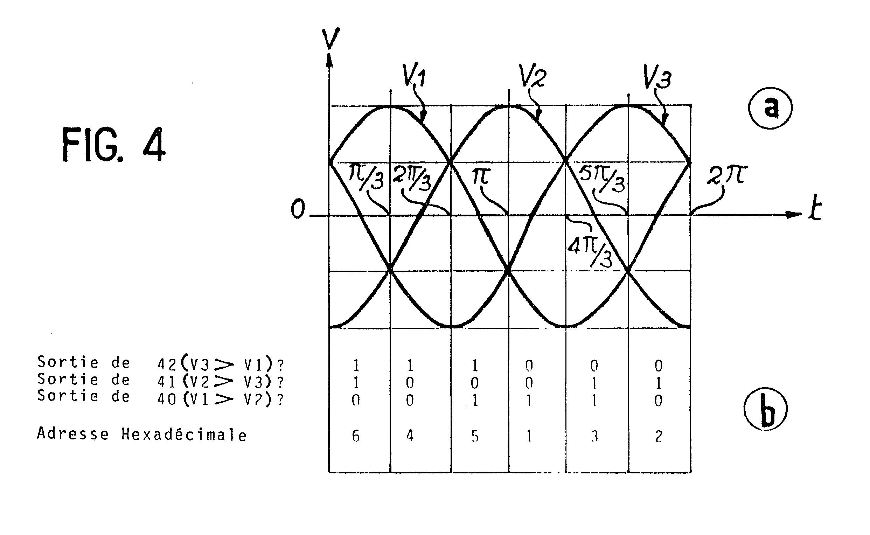

La figure 4 va pemettre de mieux comprendre le fonctionnement de l'amplificateur de l'invention, alimenté par les trois phases du réseau alternatif triphasé. Sur cette figure, on a représenté en (a) les variations en fonction du temps, des tension $V_1$, $V_2$, $V_3$ des trois phases, pour une période $(2\pi)$ de ces tensions alternatives.

On a représenté en (b) un tableau donnant les valeurs 0 ou 1 des niveaux logiques des signaux de sortie des comparateurs 40, 41, 42. Comme on l'a indique plus haut, les relations $V_1 > V_2$, $V_2 >_3$, et $V_3 > V_1$ sont vérifiées lorsque le niveau logique du signal de sortie de l'amplificateur correspondant est égal à 0. En considérant la première ligne du tableau par exemple, on voit que $V_3$ n'est pas supérieure à $V_1$ entre 0 et $\pi$, tandis que $V_3$ est supérieure à $V_1$ entre $\pi$ et $2\pi$. Le niveau du signal logique de sortie du comparateur 42 est donc égal à 1 entre 0 et $\pi/3$, $\pi/3$ et $2\pi/3$, $2\pi/3$ et $\pi$. Ce niveau est égal à 0 entre $\pi$ et $4\pi/3$, $4\pi/3$ et $5\pi/3$, $5\pi/3$ et $2\pi$.

Le même raisonnement peut évidemment être appliqué aux deux autres lignes du tableau. La dernière ligne du tableau exprime sous forme hexadécimale les adresses de la mémoire ROM qui correspondent aux valeurs binaires contenues dans les colonnes respectives du tableau. C'est ainsi par exemple que l'adresse hexadécimale correspondant à la première colonne, est 6. On voit qu'il est possible d'adresser la mémoire ROM grâce aux signaux de sortie des comparateurs 40, 41, 42, mais aussi, comme on le verra plus loin, grâce au signal de sortie du comparateur 24.

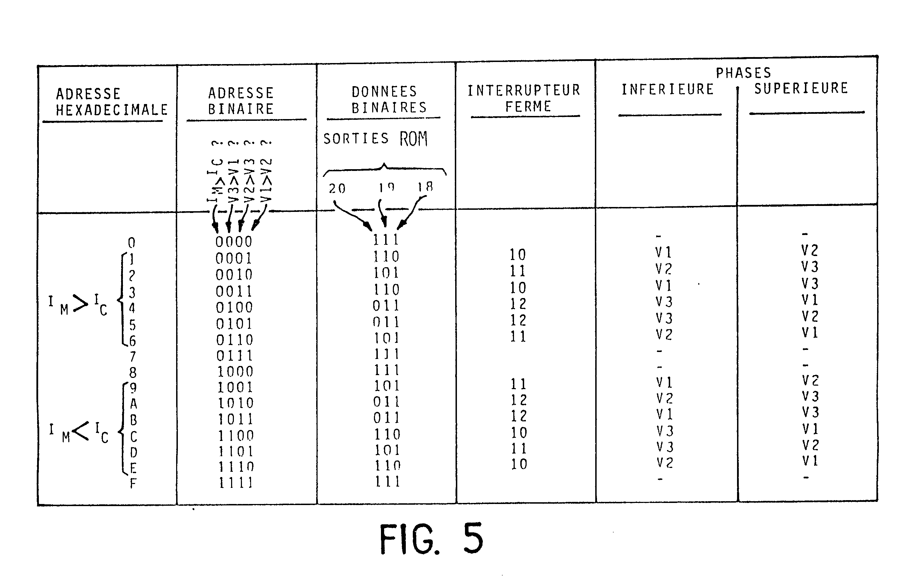

La figure 5 est un tableau qui va permettre de mieux comprendre comment, à l'aide de cet adressage de la mémoire ROM, les interrupteurs 10, 11, 12 sont commandés par les sorties 18, 19, 20 de sette mémoire. La première colonne du tableau donne l'adresse hexadécimale obtenue grâce aux signaux de sortie des comparateurs 40, 41, 42 et 24. La deuxième colonne donne les adresses binaires de la même manière que dans le tableau B de la figure 4, les valeurs binaires du signal de sortie du comparateur 24 ayant été rajoutées dans cette colonne. La troisième colonne indique les données binaires inscrites dans la mémoire morte, ces données sont fournies respectivement sur les sorties 18, 19 et 20 de la mémoire ROM, pour commander respectivement les moyens de commutation 10, 11, 12: un niveau logique 0 commande la fermeture de l'interrupteur correspondant, tandis qu'un niveau logique 1 commande son ouverture. C'est ainsi par exemple, que dans cette troisième colonne et pour la deuxième ligne de cette colonne, la sortie 18 commande la fermeture de l'interrupteur 10. Les deux autres interrupteurs qui recoivent sur leurs entrées de commande 22, 23, des signaux de niveau logique 1, sont ouverts.

La quatrième colonne du tableau indique les interrupteurs qui sont fermés en fonction des adresses sélectionnées à l'entrée de la mémoire ROM.

Les cinquième et sixième colonnes représentent respectivement les tensions appliquées à la charge lorsque l'interrupteur correspondant est fermé. On a distingué dans ces colonnes, les phases inférieure ou supérieure des tensions $V_1$, $V_2$, $V_3$ par rapport à la masse de référence.

Les adresses hexadécimales 0, 7, 8 et F ne sont pas utilisées car elles ne correspondent à aucune situation réelle; lorsque la tension $I_M$ correspondant au courant dans la charge est supérieure à la tension $I_{max}$ correspondant au courant maximum admissible, on utilise une adresse supérieure à F pour laquelle, tous les interrupteurs sont ouverts. Les adresses hexadécimales 1 à 6 correspondent au cas où la tension $I_M$ est supérieure à la tension de consigne $I_C$. Dans ce cas, en effet, le signal de sortie du comparateur 24 est au niveau logique 0; au contraire, les adresses 9, A, B, C, D, E correspondent au cas où la tension $I_M$ est inférieure à la tension de consigne $I_C$. Dans ce cas, le niveau logique du signal de sortie du comparateur 24 est égale à 1. Ces niveaux logiques apparaissent dans la deuxième colonne du tableau pour $I_M < I_C$.

L'amplificateur qui vient d'être décrit permet bien d'atteindre les buts mentionnés plus haut: lorsque la tension proportionnelle au courant circulant dans la charge est supérieure à la tension de consigne en courant, la commutation des interrupteurs intervient sur les phases dont les tensions sont les plus négatives par rapport à la tension de référence; au contraire, lorsque la tension proportionnelle au courant dans la charge est inférieure à la tension de consigne en courant, la commutation intervient sur les phases dont les tensions sont les plus positives par rapport à la tension de référence.

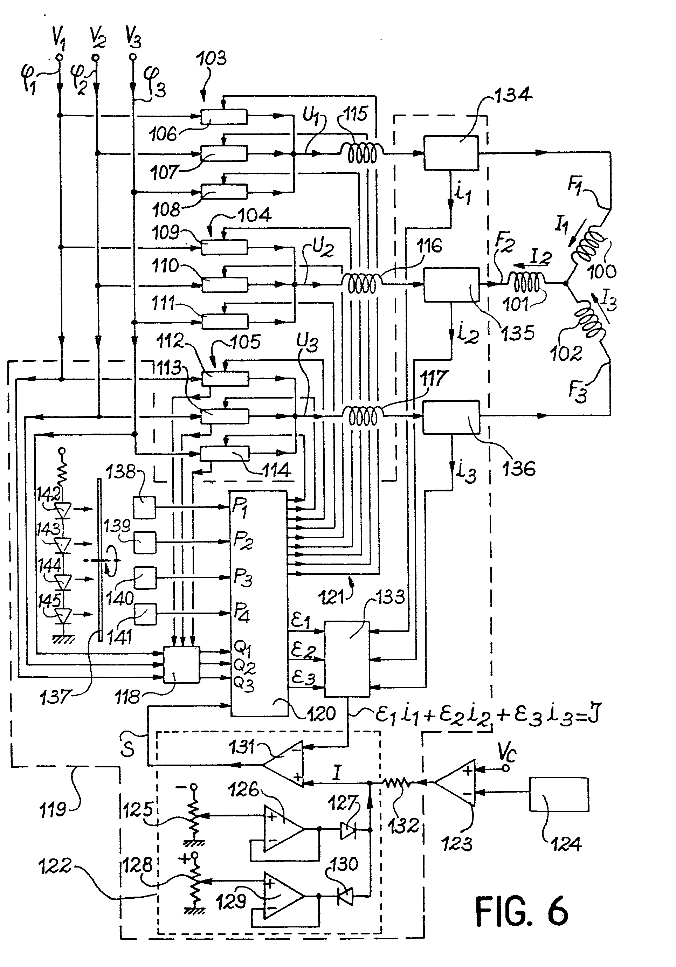

La figure 6 représente schématiquement l'application d'un amplificateur à découpage conforme à l'invention, à l'alimentation des enroulements d'un moteur autosynchrone. Un moteur autosynchrone est décrit dans la revue «L'aéronautique et l'astronautique», n° 82, 1980, pages 35 à 45. Le moteur autosynchrone comprend un rotor aimanté (non représenté sur la figure) et un stator à trois enroulements 100, 101, 102, par exemple. La position du rotor est repérée par un système (non représenté) mécanique, magnétique, électromagnétique ou optique. Selon la position du rotor, un courant circule dans les enroulements du stator de façon à produire un champ magnétique perpendiculaire à l'aimantation du rotor, soumettant ainsi le rotor à un couple.

L'orthogonalité entre le vecteur champ magnétique de chaque enroulement et le vecteur champ magnétique du rotor est obtenue généralement de façon assez peu précise, dans l'état de la technique. La façon la plus précise consiste à produire trois courants déphasés entre eux de 120°. En général, on fait tourner le champ magnétique du rotor par pas de 30°, soit douze positions par tour. Ceci permet de simplifier le capteur de position du rotor et l'électronique qui lui est associée. Cette simplification donne des résultats satisfaisants et elle est équivalente à celle qui est utilisée pour le collecteur d'un moteur à courant continu classique. Elle est décrite dans la revue précitée (figures 11 et 12).

Sur la figure 6, $V_1$, $V_2$, $V_3$ désignent les tensions respectives des trois phases d'un réseau triphasé. Comme on va le voir, trois amplificateurs à découpage, conformes à l'invention, permettent d'alimenter les enroulements 100, 101, 102 du moteur autosynchrone. Ces amplificateurs sont représentés en 103, 104, 105 sur la figure. Chaque amplificateur est alimenté par les trois phases du réseau et est constitué de la même façon que l'amplificateur de la figure 3: l'amplificateur 103 comprend pour chaque phase, des moyens de commutation associés à un pont de diodes (comparables aux moyens de commutation 10 et aux ponts de diodes 26, 27, 28, 29, de la figure 3). Cet amplificateur comprend aussi des moyens de dissipation d'énergie comparables aux moyens de dissipation $53_1$, $54_1$ de la figure 3. Les moyens de commutation, les ponts de diodes associés et les moyens de dissipation d'énergie sont représentés schématiquement en 106, 107, 108 pour l'amplificateur 103, en 109, 110, 111 pour l'amplificateur 104, et en 112, 113, 114 pour l'amplificateur 105. Chaque amplificateur comprend aussi une self reliée aux ponts de diodes correspondants. Ces selfs (comparables à la self 13 de la figure 3) sont représentées en 115, 116, 117 sur la figure. Les trois phases du réseau ainsi que le pont de diodes de l'amplificateur 105 par exemple sont reliées à des moyens de comparaison 118 appartenant à des moyens de contrôle 119. Les moyens de comparaison 118 ne sont pas représentés en détail sur la figure. Ils sont constitués par des comparateurs, tels que les comparateurs 40, 41, 42 de la figure 3. Les moyens de contrôle 119 comprennent une mémoire ROM 120 ayant des sorties 121 fournissant des signaux de commande des moyens de commutation des amplificateurs à découpage 103, 104, 105. Les moyens de contrôle 119 comprennent aussi des moyens 122 pour comparer une tension proportionnelle au courant circulant dans chacun des enroulements, avec une tension de consigne en courant (tension proportionnelle à un courant de référence) fournie par la sortie d'un comparateur de tension 123. En fait, ce comparateur reçoit sur une entrée une tension de sortie d'une dynamo tachymétrique 124, proportionnelle à la vitesse du moteur; ce comparateur reçoit sur une autre entrée une tension $V_C$ de consigne de vitesse.

Les moyens 122 comprennent deux limiteurs de courant. Le premier limiteur de courant comprend un potentiomètre 125, un amplificateur opérationnel 126, une diode 127; le deuxième limiteur de courant comprend un potentiomètre 128, un amplificateur opérationnel 129 et une diode 130. Les moyens de comparaison 122 comprennent aussi un comparateur 131. Une entrée de ce comparateur est reliée à la sortie du comparateur 123 par une résistance 132, ainsi qu'aux sorties des limiteurs de courant. Une autre entrée du comparateur 131 est reliée à une sortie d'un système de commutation 133, à portes analogiques de type MOS par exemple. Ce système de commutation est relié à des sorties de la mémoire ROM 120, ainsi qu'à des sorties de capteurs 135, 136, 137 (à effet Hall par exemple), fournissant respectivement des tensions, $i_1$, $i_2$, $i_3$ proportionnelles aux courants circulant respectivement dans les enroulements du moteur. La mémoire ROM 120 fournit au système de commutation 133 des valeurs positives ou négatives dépendant de l'angle du rotor. Ce repérage de position ou d'angle du rotor est obtenu à partir d'un disque 137 solidaire de l'axe du rotor et comportant des fentes opaques et transparentes circulant devant quatre photocoupleurs 138, 139, 140, 141 ainsi éclairés selon des séquences prédéterminées par des rayons lumineux provenant de diodes électroluminescentes 142, 143, 144, 145. Les photocoupleurs, le disque et les diodes constituent un codeur de position du rotor.

Le fonctionnement du moteur autosynchrone est le suivant: l'utilisation des trois amplificateurs à découpage alimentés par les tensions $V_1$, $V_2$, $V_3$ du réseau triphasé permet, grâce à l'utilisation de deux moyens de commutation, de réaliser une commutation dite de «LAVET» (décrite dans le document précité), et de commander la vitesse et le couple du moteur, ainsi que son sens de rotation. Les trois comparateurs des moyens de comparaison 118, comparent les tensions $V_1$, $V_2$, $V_3$ des trois phases du secteur, comme pour la figure 3. Les trois capteurs 134, 135, 136 à effet Hall, fournissent des tensions $i_1$, $i_2$, $i_3$ respectivement proportionnelles aux courants $I_1$, $I_2$, $I_3$ dans les enroulements 100, 101, 102 du moteur. Le système de commutation 133 à portes analogiques de type MOS par exemple permet de calculer la somme J

$$= \varepsilon_1 \cdot i_1 + \varepsilon_2 \cdot i_2 + \varepsilon_3 \cdot i_3.$$

Ces portes analogiques sont équivalentes à des relais. Cette valeur de J est celle qui aurait un courant continu si le moteur autosynchrone était un moteur à courant continu. Dans l'expression de J: $\varepsilon_1 = \pm 1$, $\varepsilon_2 = \pm 1$, $\varepsilon_3 = \pm 1$. Ces valeurs sont enregistrées dans la mémoire ROM 120 et dépendent chacune des signaux $P_1$, $P_2$, $P_3$, $P_4$ fournis par les photocoupleurs 138, 139, 140, 141. Cette valeur de J est également proportionnelle au couple fourni par le moteur.

Le comparateur 131 agit en trigger et permet de comparer la valeur du courant J à un courant de consigne I fourni par le comparateur 123 et dépendant de la comparaison de tension effectuée par ce comparateur. Le signal S de sortie du comparateur 131 présente un niveau logique 1 si $> J + I_0$ et présente un niveau logique 0 si $I < J - I_0$. La valeur $I_0$ correspond au seuil de déclenchement du trigger et permet l'oscillation correcte du système de découpage. Le courant J oscille linéairement entre les valeurs $I + I_0$ et $I - I_0$. On réalise ainsi un asservissement en courant.

Les deux limiteurs de courant permettent de limiter la valeur maximum de J à une valeur raisonnable pour les composantes des amplificateurs et pour le moteur.

La mémoire ROM 120 est programmée pour que le changement de la valeur de S inverse les tensions $U_1$, $U_2$, $U_3$ appliquées aux selfs 115, 116, 117.

Un asservissement en vitesse est réalisé grâce au comparateur 123. Ce comparateur fournit un courant I proportionnel à la différence entre une tension $V_c$ de consigne de vitesse et une tension proportionnelle à la vitesse du moteur, fournie par la dynamo tachymétrique 124, solidaire de l'arbre du moteur.

Si la vitesse du moteur est inférieure à la vitesse de consigne, la valeur de I augmente, provoquant ainsi une augmentation de la valeur moyenne de S et l'accélération du moteur. Si la vitesse du moteur est supérieure à la vitesse de consigne, I diminue, ce qui provoque une diminution de la vitesse du moteur.

La mémoire ROM 120 est programmable. Elle commande notamment les moyens de commutation des amplificateurs 103, 104, 105, par des signaux fournis sur ses sorties 121. La programmation de cette mémoire se fait en considérant que les interrupteurs des moyens de commutation représentés schématiquement en 106, 107, ... 113, 114, doivent permettre:

– de choisir parmi les trois phases du secteur, celle qui correspond à la valeur maximum des trois tensions $V_1$, $V_2$, $V_3$, et celle qui correspond à la valeur minimum de ces trois tensions,
– de réaliser la commutation de LAVET ou éventuellement un autre type de commutation d'enroulements de moteurs sans collecteur,
– d'effectuer le découpage de tensions d'entrée de façon à asservir la tension de sortie.

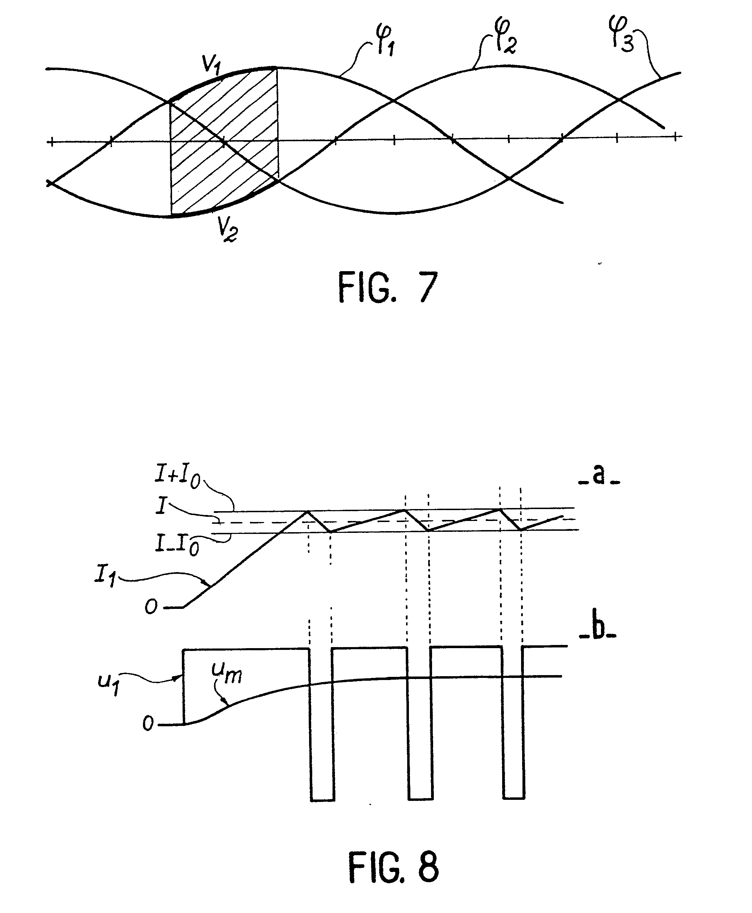

Un exemple illustré par le diagramme de la figure 7 va permettre de mieux comprendre la programmation de la mémoire:
– si à un instant déterminé $V_1$ est la tension la plus élevée et $V_2$ la tension la plus faible, il est possible d'écrire:

$\cdot V_1 > V_2 \rightarrow Q_1 = 1$,
$\cdot V_2 < V_3 \rightarrow Q_2 = 0$,
$\cdot V_3 < V_1 \rightarrow Q_3 = 0$,

$Q_1$, $Q_2$ et $Q_3$ sont les signaux de sortie des moyens de comparaison 118. Dans ces conditions, la phase $\varphi_3$ est ignorée. La phase $\varphi_1$ constitue l'alimentation positive et la phase $\varphi_2$ constitue l'alimentation négative. Les interrupteurs 108, 111 et 114 restent donc ouverts (interrupteurs reliés à la phase $\varphi_3$).
– si à cet instant, la commutation de LAVET exige que les tensions $F_1$, $F_2$, $F_3$ appliquées aux enroulements 100, 101, 102, soient telles que: $F_1 > 0$. $F_2 < 0$ et $F_3 > 0$: ces conditions dépendent des valeurs des signaux $P_1$, $P_2$, $P_3$, $P_4$ fournis par les photocoupleurs. Pour satisfaire à ces conditions, il faudrait que les interrupteurs des moyens de commutation 106, 110, 112 soient fermés. Toutefois, si cette condition était satisfaite, on obtiendrait une tension maximum sur les enroulements du moteur qui tournerait alors à une vitesse maximum. Il est donc nécessaire de contrôler la vitesse du moteur.

Lorsque les trois interrupteurs des moyens de commutation 106, 110, 112 sont fermés, les courants traversant les selfs 115, 116, 117 augmentent linéairement; la valeur correspondante de J augmente. Lorsque J atteint la valeur $I+I_0$ (I étant la valeur de consigne en courant), S passe du niveau 1 au niveau 0. La programmation de la mémoire doit être telle que lorsque S=1, les interrupteurs 106, 110, 112 sont fermés. Lorsque S=0, alors les interrupteurs 107, 109, 113 sont fermés.

Les tensions $U_1-U_2$, $U_2-U_3$, $U_3-U_1$ sont inversées. Le courant J décroît jusqu'à la valeur $I-I_0$ et S reprend la valeur 1. On obtient donc un découpage des tensions sur les trois enroulements du moteur. La valeur de consigne I est obtenue par différence entre la valeur de consigne de vitesse et la valeur de la vitesse réelle donnée par la dynamo tachymétrique. La valeur de la vitesse réelle du moteur est proportionnelle à la valeur de consigne de vitesse. La variation du courant $I_1$ (dans l'enroulement 100) par exemple, est représentée sur le diagramme (a) de la figure 8.

Les tensions appliquées aux enroulements du moteur, ne sont pas $U_1$, $U_2$, $U_3$, mais $U_1-U_2$, $U_2-U_3$, $U_3-U_1$ et sont presque constantes. Le découpage de la tension $U_1$ sur l'enroulement 100 est représenté sur le diagramme (b) de la figure 8. $U_m$ représente la tension moyenne.

En utilisant neuf interrupteurs, il est donc possible de faire fonctionner un moteur sans collecteur, à partir du réseau triphasé. Les interrupteurs assurent le découpage pour moduler les valeurs des tensions aux bornes du moteur, régulant ainsi son fonctionnement; ils assurent aussi la commutation nécessaire au fonctionnement du moteur autosynchrone.

L'amplificateur à découpage agit comme un variateur de vitesse. Lorsque le moteur fournit de l'énergie électrique, l'ensemble fonctionne en onduleur en renvoyant de l'énergie vers le réseau.

## Revendications

1. Amplificateur à découpage, pour réguler la tension d'alimentation d'une charge, comprenant une pluralités d'interrupteurs bidirectionnels (10, 11, 12) constituant des moyens de commutation (10, 11, 12) et reliés, d'une part à l'une des n phases d'un réseau électrique alternatif polyphasé et, d'autre part, à une première borne d'une self (13), la charge (M) étant connectée entre une deuxième borne de la self et une masse (R) de référence du réseau, un comparateur de consigne (24) dont une entrée reçoit une tension ($I_M$) proportionnelle au courant circulant dans la charge et dont une autre entrée reçoit une tension ($I_C$) de consigne en courant, une sortie de comparateur étant reliée à une entrée de commande des moyens de commutation pour réguler la tension appliquée à la charge, des moyens de contrôle (17) reliés par des entrées aux phases du réseau et ayant n sorties reliées respectivement à n entrées de commande des n interrupteurs bidirectionnels (10, 11, 12), les moyens de contrôle (17) commandant ces interrupteurs pour qu'un seul d'entre eux soit fermé lorsque les autres sont ouverts, de sorte que soit sélectionnée la phase dont le potentiel est le plus positif par rapport au potentiel de la masse (R) de référence, lorsque la tension ($I_M$) proportionnelle au courant circulant dans la charge est inférieure à la tension de consigne en courant ($I_C$) et pour sélectionner la phase dont le potentiel est le plus négatif par rapport au potentiel de la masse (R), de référence, lorsque la tension ($I_M$) proportionnelle au courant circulant dans la charge est supérieure à la tension de consigne en courant ($I_C$).

2. Amplificateur à découpage, selon la revendication 1, caractérisé en ce que les moyens de contrôle (17) comprennent n $\frac{(n-1)}{2}$ comparateurs (40, 41, 42) de tensions de phases, comportant chacun deux entrées et une sortie, les n $\frac{(n-1)}{2}$ sorties de ces comparateurs fournissant respectivement des signaux binaires représentatifs des résultats de ces comparaisons, une mémoire morte (ROM) présentant des entrées d'adressages qui sont reliées respectivement aux n $\frac{(n-1)}{2}$ sorties des comparateurs (40, 41, 42) de tensions de phases et à la sortie du comparateur de consigne (24), les entrées de commande des moyens de commutation (10, 11, 12) étant respectivement reliées à n sorties (18, 19, 20) de données de la mémoire, chaque adresse de la mémoire contenant n données binaires qui sont fournies à chaque instant, respectivement sur les n sorties (18, 19, 20) de la mémoire, l'une de ces données correspondant à chaque instant à la fermeture de l'un des interrupteurs, et les n−1 autres données correspondant à l'ouverture des n−1 autres interrupteurs, l'adresse sélectionnée à chaque instant dans la mémoire (ROM), par les signaux de sortie des comparateurs (40, 41, 42, 24) étant l'adresse pour laquelle la phase à cet instant est celle dont le potentiel est le plus positif par rapport au potentiel de la masse de référence, la tension ($I_M$) proportionnelle au courant circulant dans la charge étant inférieure à la tension de consigne ($I_C$) en courant, ou l'adresse pour laquelle la phase à cet instant est celle dont le potentiel est le plus négatif par rapport au potentiel de la masse de référence, la tension ($I_M$) proportionnelle au courant circulant dans la charge étant supérieure à la tension de consigne ($I_C$) en courant.

3. Amplificateur à découpage, selon la revendication 1, caractérisé en ce que chaque interrupteur comprend un pont à quatre diodes (26, 27, 28, 29) situées respectivement dans quatre branches reliant quatre nœuds (45, 46, 47, 48) de ce pont qui est en outre défini par deux diagonales, deux des nœuds (45, 46) du pont situés sur l'une des diagonales étant reliés respectivement à la phase correspondante du réseau et à la masse de référence, l'interrupteur comprenant en outre un transistor (25) de commutation, dont une électrode de commande de commutation reçoit le signal de la sortie correspondante (18) de la mémoire (ROM) pour cette phase, les deux autres électrodes du transistor étant respectivement reliées aux deux autres nœuds (47, 48) du pont situés sur l'autre diagonale, les diodes (26, 27, 28, 29) étant orientées de manière que le courant circulant dans le transistor, lorsqu'il est rendu conducteur par le signal de sortie de la mémoire (ROM), soit toujours de même sens, quelle que soit l'alternance de la phase appliquée au pont, l'état conducteur du transistor (25) correspondant à la fermeture dudit interrupteur, l'état bloqué du transistor correspondant à l'état ouvert de l'interrupteur.

4. Amplificateur à découpage, selon la revendication 1, caractérisé en ce qu'il comprend en outre des moyens (59) reliés à la charge pour comparer la valeur de la tension ($I_M$) proportionnelle au courant circulant dans la charge avec la valeur d'une tension maximum ($I_{max}$) proportionnelle à un courant maximum pouvant circuler dans la charge, une sortie de ces moyens de comparaison étant reliée à une autre entrée d'adressage de la mémoire (ROM), pour que, lorsque la tension ($I_M$) proportionnelle au courant dans la charge dépasse la tension maximum ($I_{max}$), la mémoire soit adressée de manière que ses sorties fournissent des données binaires correspondant au blocage de tous les transistors (25, 30, 35) de commande des interrupteurs.

5. Amplificateur à découpage, selon la revendication 1, caractérisé en ce qu'il comprend en outre des moyens bidirectionnels ($53_1$, $54_1$) de dissipation d'énergie, connectés entre la première borne de la self (13) et la masse (R) de référence, pour dissiper l'énergie impulsionnelle résultant de la surtension sur cette première borne, entre l'ouverture d'un interrupteur et la fermeture d'une autre.

6. Amplificateur à découpage selon la revendication 1, caractérisé en ce que les données binaires de sorties de la mémoire (ROM) sont appliquées respectivement aux électrodes de commande des transistors (25, 30, 35) par des moyens (50, 51, 52) de couplage et d'adaptation d'impédance.

7. Application de l'amplificateur à découpage à l'alimentation des enroulements d'un moteur autosynchrone, chaque enroulement étant alimenté par un amplificateur à découpage conforme à l'une quelconque des revendications 1 à 6.

**Patentansprüche**

1. Zerhackerverstärker zum Regeln der Speisespannung einer Last, mit einer Anzahl von eine Umschalteinrichtung (10, 11, 12) darstellenden bidirektionalen Unterbrechern (10, 11, 12), welche jeweils einerseits mit einer von n Phasen eines mehrphasigen elektrischen Wechselstromnetzes und andererseits mit einem Anschluss einer Drossel (13) verbunden sind, während die Last (M) einerseits mit einem zweiten Anschluss der Drossel und andererseits mit einer Bezugsmasse (R) des Netzes verbunden ist, mit einer Nennspannungs-Vergleicherschaltung (24), von welcher ein Eingang mit einer dem in der Last fliessenden Strom proportionalen Spannung ($I_M$) und ein anderer Eingang mit einer Nennstromspannung ($I_C$) gespeist ist, wobei ein Ausgang der Vergleicherschaltung mit einem Steuereingang einer Umschalteinrichtung zum Regeln der an die Last gelegten Spannung verbunden ist, ferner mit einer über ihre Eingänge mit den Phasen des Netzes verbundenen Steuereinrichtung (17), deren n Ausgänge mit n Steuereingängen der n bidirektionalen Unterbrecher (10, 11, 12) verbunden sind, wobei die Steuereinrichtung (17) die Unterbrecher derart steuert, dass jeweils einer derselben geschlossen ist, während alle anderen offen sind, so dass jeweils diejenige Phase gewählt wird, deren Spannung in bezug auf die Spannung der Bezugsmasse (R) am stärksten positiv ist, wenn die dem in der Last fliessenden Strom proportionale Spannung ($I_M$) niedriger ist als die Nennstromspannung ($I_C$), und dass jeweils diejenige Phase gewählt wird, deren Spannung in bezug auf die Spannung der Bezugsmasse (R) am stärksten negativ ist, wenn die dem in der Last fliessenden Strom proportionale Spannung ($I_M$) höher ist als die Nennstromspannung ($I_C$).

2. Zerhackerverstärker nach Anspruch 1, dadurch gekennzeichnet, dass die Steuereinrichtung n $\frac{(n-1)}{2}$ Phasenspannungs-Vergleicherschaltungen (40, 41, 42) mit jeweils zwei Eingängen und einem Ausgang aufweist, dass die n $\frac{(n-1)}{2}$ Ausgänge der Vergleicherschaltungen jeweils das Resultat der Vergleichung repräsentierende binäre Signale abgeben, dass ein ROM-Speicher über seine Adresseneingänge mit den n $\frac{(n-1)}{2}$ Ausgängen der Vergleicherschaltungen (40, 41, 42) der Phasenspannung bzw. mit dem Ausgang der Nennstromvergleicherschaltung (24) verbunden ist, dass die Steuereingänge der Umschalteinrichtung (10, 11, 12) mit jeweils einem von n Datenausgängen (18, 19, 20) des Speichers verbunden sind, dass jede Adresse des Speichers n binäre Daten enthält, welche zu jedem Augenblick über die n Ausgänge (18, 19, 20) abrufbar sind, wobei jeweils eines dieser Daten in jedem Augenblick der Schliessung eines der Unterbrecher entspricht und die n-1 anderen Daten dem Öffnen der n-1 anderen Unterbrecher entsprechen, dass die in jedem Augenblick durch die Ausgangssignale der Vergleicherschaltungen (40, 41, 42, 24) gewählte Adresse des ROM-Speichers diejenige Adresse ist, für welche die in dem betreffenden Augenblick gewählte Phase diejenige ist, deren Spannung in bezug auf die Spannung der Bezugsmasse am stärksten positiv ist, wenn die dem in der Last fliessenden Strom proportionale Spannung ($I_M$) niedriger ist als die Nennstromspannung, oder diejenige Adresse, für welche die in dem betreffenden Augenblick gewählte Phase diejenige ist, deren Spannung in bezug auf die Spannung der Bezugsmasse am stärksten negativ ist, wenn die dem in der Last fliessenden Strom proportionale Spannung ($I_M$) höher ist als die Nennstromspannung ($I_C$).

3. Zerhackerverstärker nach Anspruch 1, dadurch gekennzeichnet, dass jeder Unterbrecher eine Brückenschaltung aufweist, mit vier Dioden (26, 27, 28, 29), welche vier Knotenpunkte (45, 46, 47, 48) der Brückenschaltung miteinander verbinden, wobei die Brückenschaltung ausserdem zwei Diagonalen aufweist und zwei an einer Diagonale liegende Knotenpunkte (45, 46) der Brückenschaltung mit der entsprechenden Phase des Netzes bzw. mit der Bezugsmasse verbunden sind, dass der Unterbrecher ausserdem einen Schalttransistor (25) aufweist, dessen Steuerelektrode mit dem entsprechenden Ausgangssignal (18) des ROM-Speichers für die betreffende Phase gespeist ist, während die beiden anderen Elektroden des Transistors jeweils mit einem der an der anderen Diagonalen liegenden Knotenpunkten (47, 48) der Brückenschaltung verbunden sind, dass die Dioden (26, 27, 28, 29) so ausgerichtet sind, dass der den Transistor bei Ansteuerung desselben durch das Ausgangssignal des ROM-Speichers durchfliessende Strom unabhängig von der jeweils der Brückenschaltung zugeführten Wechselstromphase stets in der gleichen Richtung fliesst, wobei der leitende Zustand des Transistors (25) dem Schliesszustand des Unterbrechers entspricht, während der nicht leitende Zustand des Transistors dem Offenzustand des Unterbrechers entspricht.

4. Zerhackerverstärker nach Anspruch 1, dadurch gekennzeichnet, dass er ausserdem eine mit der Last verbundene Einrichtung (59) zum Vergleichen der dem in der Last fliessenden Strom proportionalen Spannung ($I_M$) mit einer einem maximalen Stromfluss in der Last proportionalen Maximalspannung ($I_{max}$) aufweist, wobei ein Ausgang dieser Vergleichereinrichtung mit einem anderen Adresseneingang des ROM-Speichers verbunden ist, so dass der Speicher, wenn die dem in der Last fliessenden Strom proportionale Spannung ($I_M$) die Maximalspannung ($I_{max}$) übersteigt, derart angesteuert wird, dass seine Ausgänge binäre Daten liefern, welche der Sperrung sämtlicher Transistoren (25, 30, 35) für die Steuerung der Unterbrecher entsprechen.

5. Zerhackerverstärker nach Anspruch 1, dadurch gekennzeichnet, dass er ausserdem eine bidirektionale Einrichtung ($53_1$, $54_1$) für die Dissipation von Energie aufweist, welche einerseits mit dem ersten Anschluss der Drossel (13) und andererseits mit der Bezugsmasse (R) verbunden ist, um die zwischen dem Öffnen eines Unterbrechers und dem Schliessen eines Anderen aufgrund der Überspannung an dem ersten Anschluss auftretende Impulsenergie abzuleiten.

6. Zerhackerverstärker nach Anspruch 1, dadurch gekennzeichnet, dass die an den Ausgängen des ROM-Speichers erscheinenden binären Daten über Koppelungs- und Impedanz-Anpassungsglieder (50, 51, 52) an die Steuerelektroden der jeweiligen Transistoren (25, 30, 35) gelegt werden.

7. Verwendung eines Zerhackerverstärkers für die Speisung der Wicklungen eines selbstgeführten Synchronmotors, wobei jede Wicklung über einen Zerhackerverstärker gemäss einem der Ansprüche 1 bis 6 gespeist wird.

**Claims**

1. Cut-off amplifier for regulating the supply voltage of a load, incorporating a plurality of bidirectional switches (10, 11, 12), constituting switching means (10, 11, 12) and connected on the one hand to one of the n phases of a polyphase alternating current mains and on the other hand to a first terminal of a choke (13), the load (M) being connected between a second terminal of the choke and a reference earth (R) of the mains, a reference comparator (24), whereof one input receives a voltage ($I_M$) proportional to the current flowing in the load and whereof another input receives a current reference voltage ($I_C$), an output of said comparator being connected to a control input of the switching means for regulating the voltage applied to the load, checking means (17) connected by inputs to the phases of the mains and having n outputs respectively connected to n control inputs of n bidirectional switches (10, 11, 12), the checking means (17) controlling said switches, so that only one of them is closed when the others are open, so that selection takes place of the phase with the most positive potential compared with the reference earth potential (R), when the voltage ($I_M$) proportional to the current flowing in the load is below the current reference voltage ($I_C$) and for selecting the phase whose potential is the most negative compared with the reference earth potential (R), when the voltage ($I_M$) proportional to the current flowing in the load is above the current reference voltage ($I_C$).

2. Cut-off amplifier according to claim 1, characterized in that the checking means (17) incorporate n $\frac{(n-1)}{2}$ comparators (40, 41, 42) of voltages of phases, each having two inputs and an output, the n $\frac{(n-1)}{2}$ outputs of said comparators respectively supplying binary signals representative of the results of these comparisons, a read only memory (ROM) having addressing inputs respectively connected to the n $\frac{(n-1)}{2}$ outputs of the comparators (40, 41, 42) of the voltages of the phases and to the output of the reference comparator (24), the control inputs of the switching means (10, 11, 12) being respectively connected to n data outputs (18, 19, 20) of the memory, each address of the memory containing n binary data, which are supplied at each instant, respectively to the n outputs (18, 19, 20) of the memory, one of the data corresponding at each instant to the closing of one of the switches and the n–1 other data corresponding to the opening of the n–1 other switches, the address selected at each instant in the memory (ROM) by the output signal of the comparators (40, 41, 42, 24) being the address for which the phase at this instant is that with the most positive potential compared with the reference earth potential, the voltage ($I_M$) proportional to the current flowing in the load being below a

current reference voltage ($I_C$), or the address for which the phase at this instant has the most negative potential, compared with the reference earth potential, the voltage ($I_M$) proportional to the current flowing in the load being above the current reference voltage ($I_C$).

3. Cut-off amplifier according to claim 1, characterized in that each switch comprises a bridge with four diodes (26, 27, 28, 29) respectively located in the four branches connecting four nodes (45, 46, 47, 48) of said bridge, which is also defined by two diagonals, two nodes (45, 46) of the bridge located on one of the diagonals being respectively connected to the corresponding phase of the mains and to the reference earth, the switch also having a switching transistor (25), whereof a switching control electrode receives the signal from the corresponding output (18) of the memory (ROM) for said phase, the two other electrodes of the transistor being respectively connected to the two other nodes (47, 48) of the bridge located on the other diagonal, the diode (26, 27, 28, 29) being oriented in such a way that the current flowing in the transistor, when it is rendered conductive by the output signal of the memory (ROM) is always of the same sense, no matter what the alternation of the phase applied to the bridge, the conductive state of transistor (25) corresponding to the closing of said switch, whereas the non-conductive state of the transistor corresponds to the open state of the switch.

4. Cut-off amplifier according to claim 1, characterized in that it also comprises means (59) connected to the load for comparing the value of the voltage ($I_M$) proportional to the current flowing in the load with the value of a maximum voltage ($I_{max}$) proportional to a maximum current able to flow in the load, one output of said comparison means being connected to another addressing input of the memory (ROM), so that when the voltage ($I_M$) proportional to the current in the load exceeds the maximum voltage ($I_{max}$), the memory is addressed in such a way that its outputs supply binary data corresponding to the blocking of all the control transistors (25, 30, 35) of the switches.

5. Cut-off amplifier according to claim 1, characterized in that it also comprises bidirectional energy dissipation means ($53_1$, $54_1$) connected between the first terminal of choke (13) and the reference earth (R), in order to dissipate the pulsed energy resulting from the overvoltage on said first terminal between the opening of one switch and the closing of another.

6. Cut-off amplifier according to claim 1, characterized in that the binary data of the outputs of the memory (ROM) are respectively applied to the control electrodes of the transistors (25, 30, 35) by the coupling and impedance matching means (50, 51, 52).

7. Application of the cut-off amplifier to the supply of the windings of an autosynchronous motor, each winding being supplied by a cut-off amplifier according to any one of the claims 1 to 6.

FIG. 1

FIG. 2

FIG. 3

FIG. 4

**(a)**

$V$ — $V_1$ — $V_2$ — $V_3$

$\pi/3$ — $2\pi/3$ — $\pi$ — $5\pi/3$ — $2\pi$

$0$ — $t$

$4\pi/3$

| Sortie de 42 (V3 > V1) ? | 1 | 1 | 1 | 0 | 0 | 0 |
| Sortie de 41 (V2 > V3) ? | 1 | 0 | 0 | 0 | 1 | 1 |
| Sortie de 40 (V1 > V2) ? | 0 | 0 | 1 | 1 | 1 | 0 |
| Adresse Hexadécimale | 6 | 4 | 5 | 1 | 3 | 2 |

**(b)**

0 165 107

| ADRESSE HEXADECIMALE | ADRESSE BINAIRE ($I_M > I_C$? $V3 > V1$? $V2 > V3$? $V1 > V2$?) | DONNEES BINAIRES SORTIES ROM (20 19 18) | INTERRUPTEUR FERME | PHASES INFERIEURE | SUPERIEURE |
|---|---|---|---|---|---|
| 0 | 0000 | 111 | | - | - |
| 1 | 0001 | 110 | 10 | V1 | V2 |
| 2 | 0010 | 101 | 11 | V2 | V3 |
| 3 | 0011 | 110 | 10 | V1 | V3 |
| 4 | 0100 | 011 | 12 | V3 | V1 |
| 5 | 0101 | 011 | 12 | V3 | V2 |
| 6 | 0110 | 101 | 11 | V2 | V1 |
| 7 | 0111 | 111 | | - | - |
| 8 | 1000 | 111 | | - | - |
| 9 | 1001 | 101 | 11 | V1 | V2 |
| A | 1010 | 011 | 12 | V2 | V3 |
| B | 1011 | 011 | 12 | V1 | V3 |
| C | 1100 | 110 | 10 | V3 | V1 |
| D | 1101 | 101 | 11 | V3 | V2 |
| E | 1110 | 110 | 10 | V2 | V1 |
| F | 1111 | 111 | | - | - |

Rows 1–6: $I_M > I_C$

Rows 9–E: $I_M < I_C$

FIG. 5

**FIG. 6**

FIG. 7

FIG. 8